# EUROPEAN PATENT SPECIFICATION

(11) **EP 2 747 404 B1**
(45) Date of publication and mention of the grant of the patent: **25.09.2019**
(21) Application number: 13196399.3
(22) Date of filing: 10.12.2013
(51) Int. Cl.: H04N 1/00, H04N 1/32, G06F 3/048, H04N 101/00

(54) **Image processing terminal, image processing system, and computer-readable storage medium storing control program of image processing terminal**
Bildverarbeitungsendgerät, Bildverarbeitungssystem und computerlesbares Speichermedium mit darauf gespeichertem Steuerprogramm des Bildverarbeitungsendgeräts
Terminal et système de traitement d'image, support de stockage lisible par ordinateur stockant un programme de commande de terminal de traitement d'image

(30) Priority: 19.12.2012 JP 2012277324
(43) Date of publication of application: 25.06.2014
(73) Proprietor: Konica Minolta, Inc., Tokyo 100-7015 (JP)
(72) Inventor: Sawayanagi, Kazumi, Tokyo, 100-7015 (JP); Tomono, Kazuaki, Tokyo, 100-7015 (JP); Takahashi, Kenichi, Tokyo, 100-7015 (JP); Matsuhara, Kenji, Tokyo, 100-7015 (JP); Taniguchi, Yosuke, Tokyo, 100-7015 (JP)
(74) Representative: Hoffmann Eitle

(56) References cited:
- DE-A1-102009 043 641
- JP-A- 2012 205 153
- US-A1- 2012 148 106
- JONATHAN J HULL ET AL: "Paper-Based Augmented Reality", ARTIFICIAL REALITY AND TELEXISTENCE, 17TH INTERNATIONAL CONFERENCE ON, IEEE, PI, 1 November 2007 (2007-11-01), pages 205-209, XP031199360, ISBN: 978-0-7695-3056-7
- MATTHIAS BALDAUF ET AL: "Markerless visual fingertip detection for natural mobile device interaction", MOBILEHCI '11 PROCEEDINGS OF THE 13TH INTERNATIONAL CONFERENCE ON HUMAN COMPUTER INTERACTION WITH MOBILE DEVICES AND SERVICES, 30 August 2011 (2011-08-30), pages 539-544, XP055101189, DOI: 10.1145/2037373.2037457 ISBN: 978-1-45-030541-9
- FITZMAURICE G W: "SITUATED INFORMATION SPACES AND SPATIALLY AWARE PALMTOP", COMMUNICATIONS OF THE ACM, ASSOCIATION FOR COMPUTING MACHINERY, INC, UNITED STATES, vol. 36, no. 7, 1 July 1993 (1993-07-01), pages 39-49, XP000384279, ISSN: 0001-0782, DOI: 10.1145/159544.159566
- "Reality, improved", INTERNET CITATION, 3 September 2009 (2009-09-03), pages 1-3, XP002604882, Retrieved from the Internet: URL:http://www.economist.com/node/14299602 /print [retrieved on 2010-10-12]

## Description

### BACKGROUND OF THE INVENTION

### FIELD OF THE INVENTION

The present invention relates to an image processing terminal, an image processing system, and a computer-readable storage medium storing a control program of an image processing terminal that are capable of displaying, on the image processing terminal, which are capable of image processing while generating an expanded sense of reality, information obtained from a database on a server through a network.

### DISCUSSION OF THE BACKGROUND

In recent years, in the field of smartphones, tablet terminals, and other image processing terminals capable of image processing, active research and study have been under way regarding the technology of obtaining various kinds of information from a database on a server and displaying the obtained information on a terminal in an attempt to minimize the amount of retention data at the terminal side. For example, Japanese Unexamined Patent Application Publication No. 2007-264992 discloses use of this technology to facilitate document search.

Another example is recited in Japanese Unexamined Patent Application Publication No. 2009-230748, which discloses placing a two-dimensional bar code stamp on a printed material, such as a paper medium, and scanning the stamp under an image processing terminal, for the purpose of using the stamp in document authentication.

For further example, Japanese Unexamined Patent Application Publication No. 2009-301350 discloses a technique associated with an imaginary image display system. In the imaginary image display system, a photographing section photographs a real image, and in response, an image object is read from an image object storage. The image object is superimposed over the real image, resulting in an imaginary image. By displaying the resulting imaginary image, an expanded sense of reality is generated.

The following documents D1 and D2 constitute prior art for the present invention:
D1: JP 2012 205153 A (KYOCERA CORPORATION)
D2: JONATHAN J HULL ET AL: "Paper-Based Augmented Reality", XP031199360

Document D1 discloses an image processing terminal including the features a)-g) of the preamble of claim 1. Document D2 which discloses an image processing terminal including the features a)-g) of the preamble of claim 2 describes that an image processing terminal which also allows the creation of a virtual image when photographing a document has the possibility to download from a server further details to fill in placeholders in the document. The placeholders can be indicated and a zooming function may be used.

### [Problems to be Solved by the Invention]

Many image processing terminals such as smartphones and tablet terminals are provided with a camera capability such as a CMOS image sensor. The camera capability is used to photograph a particular subject on a paper medium or other printed material. In accordance with the photographed real image of the subject, an image object (which is herein referred to as air tag) is superimposed over the real image, resulting in an imaginary image. The resulting imaginary image is displayed on the display of an image processing terminal. In this manner, it is possible to generate an expanded sense of reality.

A possible air-tag application is that while a printed material such as an operation manual of any of various appliances are photographed by an image processing terminal, the display of the image processing terminal displays a real-time image of the printed material and an air tag superimposed over the real-time image. In this case, air tags may be superimposed over a particular air tag displayable position (for example, a particular word and a particular drawing) on the printed material displayed in real time on the display. The air tags indicate item names of electronic information to be added (which will be hereinafter referred to as electronic additional information, examples including help information explaining the word, a detailed configuration of the drawing, and moving image information on appliance operation statuses).

Specifically, using image analysis technology, the image processing terminal analyzes a two-dimensional code or a similar identifier printed in advance on a printed material, thus specifying the printed material. When electronic additional information exists that is related in advance to the printed material, the electronic additional information is read and the display displays air tags in the vicinity of a particular air tag displayable position on the printed material specified in the electronic additional information. A possible manner of displaying the air tags to display item names indicating the content of the electronic additional information is by the use of text in what is called a balloon often used in cartoons. Then, a user can touch any of the air tags displayed on the display, where it has a touch screen capability, to have the electronic additional information displayed on the display.

Here, it is possible to store the electronic additional information not in the image processing terminal but in a database on a server that is connectable to the image processing terminal through a network. In this case, where necessary, the user can handle the image processing terminal to call up the electronic additional information. Thus, it is possible to store the electronic additional information in, instead of the image processing terminal, a database on a server connectable to the image processing terminal through a network. This ensures a reduced memory capacity of the image processing terminal, and additionally, ensures collective update of the electronic additional information at the server side.

Unfortunately, with an image processing terminal capable of displaying air tags, displaying a large number of air tags on the touch screen display can cause an erroneous touch on an adjacent air tag on the touch screen display. Thus, it can be difficult to select a desired air tag. This problem applies particularly in smartphones and similar image processing terminals that have a limited display area.

The present invention has been made in view of the above-described circumstances, and it is an object of the present invention to provide an image processing terminal, an image processing system, and a control program of an image processing terminal that ensure selection of a desired air tag even when a large number of air tags exist The object outlined above is achieved by an image processing terminal having the features of claim 1.

### SUMMARY OF THE INVENTION

In the image processing terminals, the subject may be assigned a particular code, and the image analysis section may be configured to analyze the image of the subject photographed by the photographing section so as to extract the particular code of the subject.

In the image processing terminals, after the operation of pointing to the particular air tag displayable position has been performed, only an air tag corresponding to the particular air tag displayable position is displayed, with the rest of the plurality of air tags not corresponding to the particular air tag displayable position deleted. This enables the user to grasp in advance the whole picture of a plurality of pieces of electronic additional information corresponding to the subject. At the same time, when the user needs access to a necessary piece of electronic additional information, the other, unnecessary pieces of electronic additional information are not displayed, and therefore the user will not be annoyed by the display of the unnecessary pieces of electronic additional information.

In the image processing terminals, the image of the subject over which the display control section superimposes the at least one air tag may be a real-time image of the subject photographed by the photographing section. Alternatively, the image of the subject over which the display control section superimposes the at least one air tag may be an image obtained from electronic data of the subject. Furthermore, the image of the subject on which the at least one air tag is superimposed may be selected from the real-time image and the electronic data of the subject.

The image processing terminals may further include a network interface configured to communicate with a server through a network. The server may include a database that stores the electronic additional information of the subject in relation to a particular code to specify the subject. The network interface may be configured to transmit to the server the particular code to specify the subject photographed by the photographing section, and configured to receive from the server the electronic additional information of the subject so that the electronic additional information obtaining section obtains the electronic additional information.

According to another aspect of the present invention, the object outlined above is achieved by an image processing system having the features of claim 10, i.e. any of the above-described image processing terminals, and a server connectable to the image processing terminal through a network. The server includes a database that stores electronic additional information of a subject in relation to a particular code to specify the subject. The image processing terminal is configured to transmit to the server a particular code to specify the subject photographed by a photographing section of the image processing terminal, and is configured to receive from the server the electronic additional information of the subject so that an electronic additional information obtaining section of the image processing terminal obtains the electronic additional information.

According to another aspect of the present invention, the object outlined above is achieved by a a computer-readable storage medium according to claim 11 which stores a control program of an image processing terminal subject. The image processing terminal includes a photographing section and a display section. The photographing section is configured to photograph an image of a subject. The display section is configured to display the image of the subject photographed by the photographing section. The control program causes a computer to perform obtaining electronic additional information to be added to the subject photographed by the photographing section. The display section is controlled to display the image of the subject with at least one air tag superimposed over the image of the subject. The at least one air tag corresponds to the electronic additional information obtained in the obtaining step. In the case where, while the display section is displaying a plurality of air tags in the controlling step, the photographing section photographs an operation of pointing to a particular air tag displayable position within the subject by a fingertip of a user of the image processing terminal, a position of the fingertip in the subject photographed by the photographing section is specified so as to specify the particular air tag displayable position within the subject pointed to by the fingertip. The display section is controlled to display an air tag, among the plurality of air tags, corresponding to the particular air tag displayable position specified in the image analysis performing step.

### [Effects of the Invention]

With the present invention, a fingertip's direct operation of pointing to the subject is photographed, instead of pointing to the image displayed on the display section, so that a particular air tag displayable position within the subject is specified, and only an air tag corresponding to the particular air tag displayable position is selected from among a plurality of air tags displayed on the display section together with the subject, and displayed on the display section. This ensures an expanded area of pointing by the fingertip as compared with the case of the fingertip pointing to the image displayed on the display section. This, in turn, facilitates selection of an air tag and ensures selection of a desired air tag even when a large number of air tags exist.

The subject is assigned a particular code, and the particular code can be extracted by image analysis. This facilitates specification of the subject on the image processing terminal. Also the image of the subject on which an air tag is superimposed is a real-time image, and this ensures that the air tag can be displayed at any position of the subject as desired by the user. Further, the image of the subject on which an air tag is superimposed is an image obtained from electronic data, and this eliminates or minimizes mis-positioning of the image on the display section caused by jiggling of the user's hand.

Further, the electronic additional information of the subject is stored in a database of a server that is communicable through a network. This ensures that the user can, as necessary, handle the image processing terminal to call up the electronic additional information of the subject. Thus, there is no need for storing the electronic additional information in the image processing terminal. This ensures a reduced memory capacity of the image processing terminal, and additionally, ensures collective update of the electronic additional information at the server side.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 illustrates an exemplary configuration of an image processing system according to embodiment of the present invention.
FIG. 2 is a block diagram illustrating a detailed configuration of an image processing terminal 100;
FIG. 3 illustrates a relationship between a subject MN and electronic additional information;
FIG. 4 illustrates exemplary air tags displayed on the image processing terminal 100;
FIG. 5 is a flowchart of processing executed at the image processing terminal 100 and a server 300;
FIGs. 6A and 6B illustrate states in which air tags are superimposed over the subject MN displayed in real time on the display section 101;
FIG. 7 is a state transition diagram illustrating how the electronic additional information is displayed when a particular air tag is pointed to from among a plurality of air tags; and
FIG. 8 is a flowchart of processing executed at the image processing terminal 100 and the server 300 in an image processing system according to an example explained for a better understanding of the present invention.

### DESCRIPTION OF THE EMBODIMENTS

### <Embodiment 1>

The embodiment is regarding an image processing system and a method for processing an image. In the image processing system and the method, a user of the image processing terminal performs an operation of pointing to a particular air tag displayable position within the subject at a fingertip of the user on the subject instead of on the display section. Based on this operation, an image processing section specifies the position of the fingertip on the display section, thereby specifying the particular air tag displayable position within the subject. Among a plurality of air tags, only an air tag corresponding to the particular air tag displayable position is displayed on the display section.

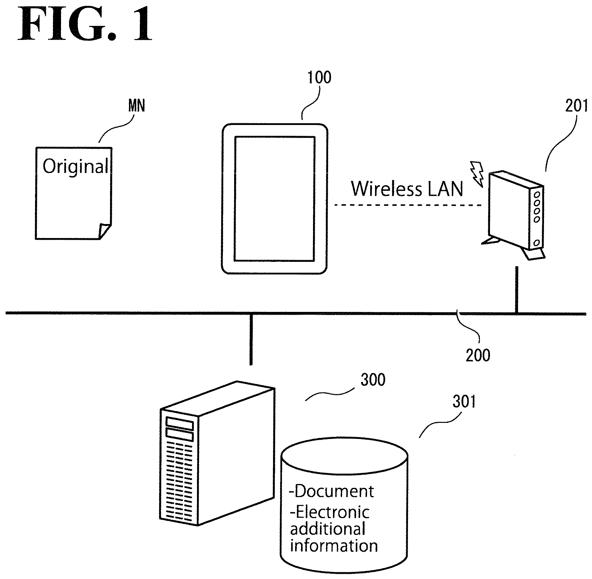

FIG. 1 illustrates an exemplary configuration of an image processing system according to this embodiment. This image processing system includes an image processing terminal 100, a network 200, and a server 300. The image processing terminal 100 is a portable information device capable of image processing, examples including a smartphone and a tablet terminal. The network 200 is a communication network that may be either a closed network such as LAN (Local Area Network) or an open network such as the Internet. The server 300 is dedicated to the image processing terminal 100 as server 300's client.

The image processing terminal 100 is connectable to the network 200 through a wireless LAN access point 201. The image processing terminal 100 is also connectable to the server 300 through the network 200. The server 300 includes a database 301.

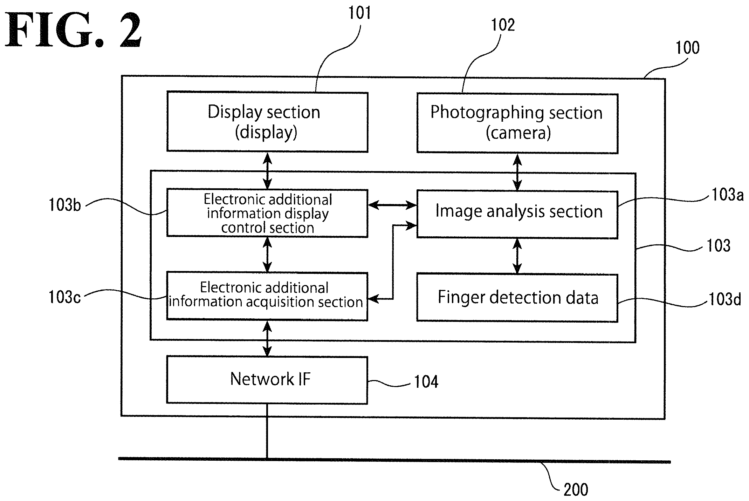

FIG. 2 is a block diagram illustrating a detailed configuration of the image processing terminal 100. The image processing terminal 100 includes a liquid crystal display, an organic EL (ElectroLuminescence) display, or any other display, and includes a display section 101, a photographing section 102, an image processing section 103, and a network interface 104. The display section 101 has a touch screen capability. The photographing section 102 includes a CMOS (Complementary Metal Oxide Semiconductor) image sensor camera, a CCD (Charge Coupled Device) image sensor camera, or any other camera. The image processing section 103 performs image processing with respect to an image to be displayed on the display section 101 and with respect to an image photographed by the photographing section 102. The network interface 104 is an interface for connection with the network 200. For simplicity of description of FIG. 2, the wireless LAN access point 201 is not shown between the image processing terminal 100 and the network 200.

The image processing terminal 100 according to this embodiment is capable of, using the photographing section 102, photographing a subject MN, which is a paper medium or other printed material indicated as "original" in FIG. 1. The image processing terminal 100 is also capable of, using the display section 101, displaying in real time the subject MN photographed by the photographing section 102. Then, in accordance with the photographed real image of the subject MN, the image processing section 103 of the image processing terminal 100 superimposes air tags, which are image objects, over the real image, resulting in an imaginary image. The image processing section 103 then displays the resulting imaginary image on the display section 101. In this manner, the image processing section 103 is capable of generating an expanded sense of reality.

Here is a possible example of how to use air tags. In the case where the subject MN is an operation manual or a similar printed material of any of various kinds of appliances, while the photographing section 102 is photographing the subject MN, the display section 101 may display air tags in such a manner that the air tags are superimposed over a real-time image of the subject MN, which is a printed material, or that the air tags are superimposed over electronic data of the subject MN (for example, PDF (Portable Document Format) data or JPEG (Joint Photographic Experts Group) data, which would be obtained by scanning the subject MN in advance). In this case, in accordance with a particular air tag displayable position within the printed material (for example, a particular word and a particular drawing) displayed on the display section 101, the image processing section 103 may show the superimposed air tags as item indicators of electronic additional information that are electronic information corresponding to the particular air tag displayable position and to be added to the subject MN (examples of the electronic additional information including help information explaining the word, a detailed configuration of the drawing, and moving image information on appliance operation statuses).

Here, the electronic additional information is not necessarily stored in the image processing terminal 100. The electronic additional information may also be stored, together with the electronic data of the subject MN, in a database 301 on the server 300, which is connectable to the image processing terminal 100 through the network 200. This ensures that the user, as necessary, can handle the image processing terminal 100 to call up the electronic additional information and the electronic data of the subject MN. Thus, the electronic additional information is not stored at the image processing terminal 100 side but at the database 301 side on the server 300. This ensures a reduced memory capacity of the image processing terminal 100, and additionally, ensures collective update of the electronic additional information at the server 300 side. The following description takes, as an example, storing the electronic additional information in the database 301 on the server 300.

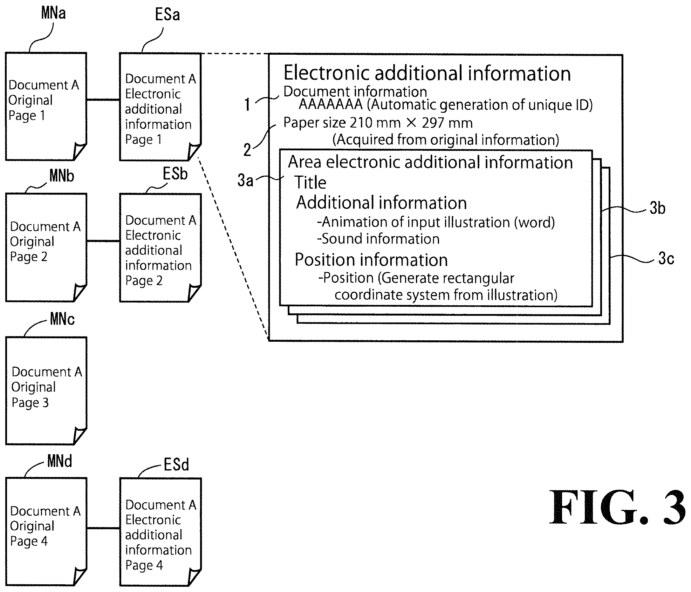

FIG. 3 illustrates a relationship between the subject MN and the electronic additional information. In this example, the subject MN is a four-page document A. The first page, MNa, of the document A is corresponding to electronic additional information ESa. The second page, MNb, is corresponding to electronic additional information ESb. The fourth page, MNd, is corresponding to electronic additional information ESd. In this example, no electronic additional information exists that corresponds to the third page, MNc, of the document A.

As shown in FIG. 3, examples of the electronic additional information ESa include ID information 1 (indicated as AAAAAAA), size information 2, and pieces of area electronic additional information 3a to 3c. The ID information 1 indicates the first page of the document A. The size information 2 indicates paper size. The pieces of area electronic additional information 3a to 3c each indicate at which position within the first page of the document A (for example, a position relative to the origin position of the page, described later) to place an air tag, what air tag of title (item) to display, and what kind of additional information exists (for example, an animation of an illustration and sound information on appliance operation statuses). The individual pieces of area electronic additional information 3a to 3c correspond to each individual air tag displayed on the display section 101.

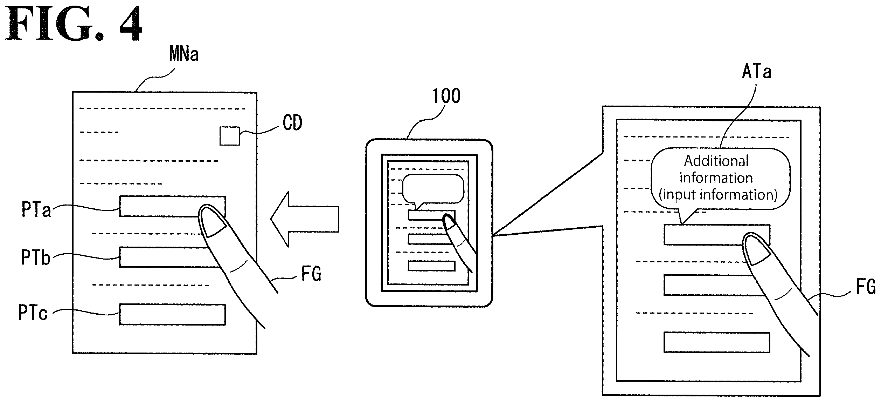

FIG. 4 illustrates exemplary air tags displayed on the image processing terminal 100. As shown in FIG. 4, the first page, MNa, of the document A is in advance assigned a particular code CD such as a two-dimensional code. The particular code CD corresponds to the ID information 1, which indicates the first page of the document A, and is provided by printing, seal attachment, or any other method. The particular code CD indicates the ID information 1, which in turn indicates the first page of the document A. The first page, MNa, of the document A includes air tag displayable positions PTa to PTc. The air tag displayable positions PTa to PTc are positions where air tags respectively corresponding to the pieces of area electronic additional information 3a to 3c are displayable. In FIG. 4, the display section 101 of the image processing terminal 100 displays an air tag ATa alone, which corresponds to the air tag displayable position PTa.

The air tag ATa is disposed on the display section 101 at a position specified by the position information in the area electronic additional information 3a. Here, the air tag ATa is an item indicating the content of the electronic additional information, and is displayed in text form in what is called a balloon often used in cartoons (in this example, the indication "Additional information").

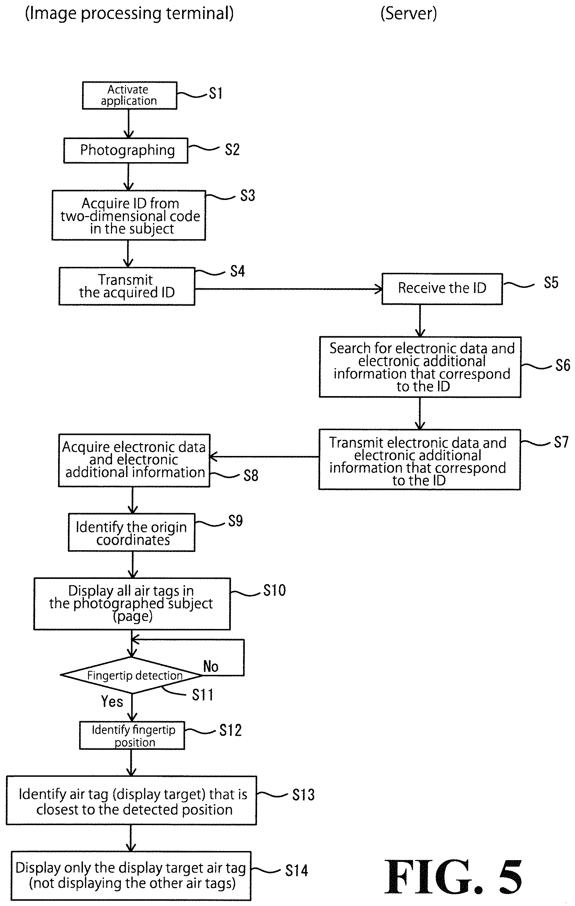

FIG. 5 is a flowchart of processing executed at the image processing terminal 100 and the server 300.

First, the user handles the image processing terminal 100 to activate an application program according to this embodiment (step S1). Next, the subject MN is photographed (step S2).

Here, the image processing section 103 includes an image analysis section 103a, a display control section 103b, an electronic additional information obtaining section 103c, and a finger detection data 103d.

The image analysis section 103a determines, by a known image analysis technique, whether the photographed subject MN contains a particular code CD, such as a two-dimensional code. When a particular code CD is contained, the image analysis section 103a specifies a content indicated by the particular code CD (in this example, the ID information 1, which indicates the first page of the document A) (step S3). Then, the electronic additional information obtaining section 103c receives, from the image analysis section 103a, the ID information 1 obtained using the particular code CD as a key, and transmits the ID information 1 to the server 300 from the network interface 104 through the network 200 (step S4). This causes the image processing terminal 100 to make a demand to the database 301 on the server 300 for electronic data of the first page, MNa, of the document A and for the electronic additional information ESa of the first page, MNa, of the document A stored in the database 301 and corresponding to the ID information 1, which indicates the first page of the document A and is indicated by the particular code CD.

The server 300 receives the ID information 1 transmitted from the image processing terminal 100 (step S5), and searches the database 301 for electronic data and electronic additional information that correspond to the ID information 1 (step S6). When electronic data and electronic additional information that correspond to the ID information 1 exist, the server 300 transmits the electronic data and electronic additional information to the image processing terminal 100 (step S7). Thus, the network interface 104 receives the electronic data and electronic additional information from the server 300, and the electronic additional information obtaining section 103c obtains the electronic data and electronic additional information of the first page, MNa, of the document A (step S8). When the search in the database 301 finds no relevant electronic data or electronic additional information, the server 300 may transmit to the image processing terminal 100 error information or similar information notifying search failure, and the image processing terminal 100 may display an error message.

The image analysis section 103a determines, by a known image analysis technique, the paper area and paper orientation of the first page, MNa, of the photographed document A. Then, based on the determination, the image analysis section 103a specifies the origin position (for example, the upper left corner of the paper) of the first page, MNa, of the document A (step S9). Next, based on the position information contained in each of the pieces of area electronic additional information contained in the electronic additional information, the display control section 103b checks a position relative to the origin position specified at step 9. Thus, the display control section 103b recognizes the display positions of all the air tags respectively corresponding to the pieces of area electronic additional information obtained from the electronic additional information on the subject MN displayed on the display section 101. The display control section 103b then displays all the air tags in such a manner that the air tags are superimposed over the image of the subject MN at their respective display positions (step 10).

Specifically, when the first page, MNa, of the document A shown in FIG. 4 is photographed, the display control section 103b specifies a position relative to the origin position specified at step 9 from the pieces of position information (see FIG. 3) contained in the pieces of area electronic additional information 3a to 3c of the electronic additional information. Thus, the display control section 103b specifies the air tag displayable positions PTa to PTc in the first page, MNa, of the document A displayed on the display section 101, and displays, at the air tag displayable positions PTa to PTc, the air tags indicating titles (item names) respectively corresponding to the pieces of area electronic additional information 3a to 3c.

Regarding how to display the air tags, it is possible to superimpose the air tags over the first page, MNa, of the document A displayed in real time on the display section 101. It is also possible to superimpose the air tags over the electronic data of the first page, MNa, of the document A obtained by the electronic additional information obtaining section 103c.

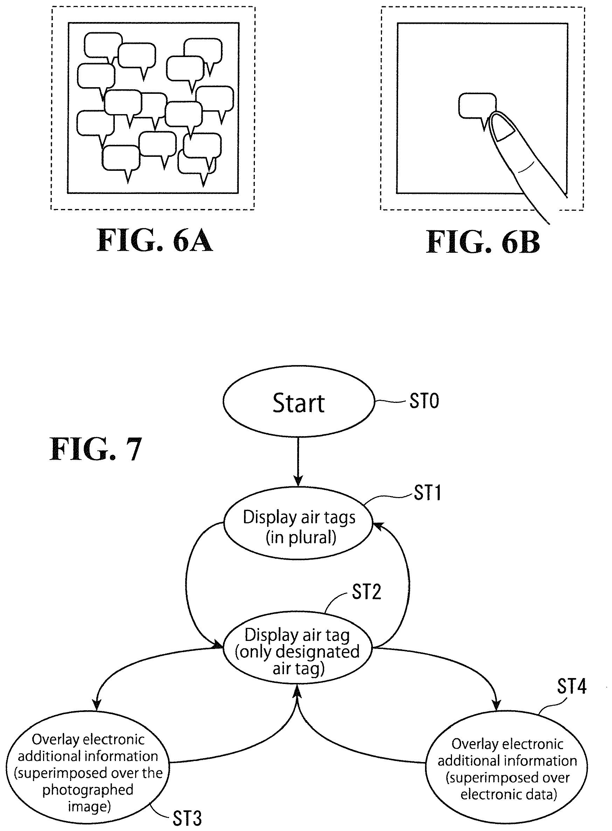

FIGs. 6A and 6B illustrate states in which air tags are superimposed over the subject MN displayed in real time on the display section 101. FIG. 6A illustrates a state in which a plurality of air tags are displayed on the display section 101 of the image processing terminal 100 as a result of the image processing terminal 100 and the server 300 performing the operations at steps 1 to 10.

As described in "Problems to be Solved by the Invention", displaying a large number of air tags on the display section 101 as shown in FIG. 6A can cause an erroneous touch on an adjacent air tag on the touch screen display section. Thus, it can be difficult to select a desired air tag.

In view of this, in this embodiment, as shown in FIG. 4, the user of the image processing terminal 100 points to a position, among the air tag displayable positions PTa to PTc within the subject MNa, that is the desired position to display the electronic additional information. The user does this operation of pointing at a fingertip FG of the user on the subject MNa instead of on the display section 101. Then, based on this operation of pointing, the image analysis section 103a of the image processing section 103 uses the finger detection data 103d to specify by image analysis the position of the fingertip FG on the display section 101, thereby specifying which of the air tag displayable positions PTa to PTc within the subject MNa is pointed to. Then, the image analysis section 103a causes the display section 101 to display only the air tag ATa, among the plurality of air tags, which is corresponding to the air tag displayable position PTa, which is the particular air tag displayable position pointed to by the fingertip FG.

Specifically, referring to the flowchart in FIG. 5, at step 10, the image processing terminal 100 displays all the air tags ATa to ATc respectively of the air tag displayable positions PTa to PTc. Then, the image analysis section 103a detects whether the photographing section 102 has photographed the fingertip FG of the user (step S11). Here, when the user points, at the user's fingertip FG, to any of the air tag displayable positions PTa to PTc on the subject MNa (that is, on the printed material) within a field angle of the photographing section 102 photographing the subject MNa, then the photographing section 102 photographs the fingertip FG of the user pointing to the subject MNa. Thus, now that the image analysis section 103a detects the photographing section 102 photographing the fingertip FG of the user pointing to the subject MNa (Yes at step S11), the image analysis section 103a specifies the position of the fingertip FG of the user pointing to the subject MNa (step S12).

Here, the image analysis section 103a uses the finger detection data 103d to perform known image analysis, thereby specifying the position of the fingertip of the user pointing to the display section 101. The finger detection data 103d contains known data about fingertip image detection such as image analysis color data indicating the contrast between the fingertip color (usually flesh color) and the color (usually white) of the printed material, and image analysis shape data indicating the fingertip shape. Then, the image analysis section 103a converts the position of the fingertip FG into two-dimensional coordinates on the subject MN. In the operations at steps S11 and S12 to determine the position to which the fingertip FG points, it is possible to make the determination when, for example, the fingertip FG detected based on the finger detection data 103d stays within a predetermined distance range for over a predetermined period of time.

Next, the display control section 103b specifies, as the particular air tag displayable position pointed to for air tag display, one of the air tag displayable positions PTa to PTc within the subject MNa that is closest to the converted coordinates (step S13). Then, the display control section 103b displays on the display section 101 only the air tag, among the plurality of air tags, corresponding to the particular air tag displayable position specified at step S13 (step S14). This state corresponds to the right end representation of FIG. 4 and to FIG. 6B.

Then, the display control section 103b displays on the display section 101 the content of the electronic additional information (for example, moving image information on appliance operation statuses) corresponding to the air tag corresponding to the particular air tag displayable position.

FIG. 7 is a state transition diagram illustrating how the electronic additional information is displayed when a particular air tag is pointed to from among a plurality of air tags. When the above-described application program is activated and the air tags are displayed on the display section 101 at their respective positions respectively corresponding to the air tag displayable positions PTa to PTc, this state is referred to as a state ST1.

When in the state ST1 an air tag is specified by the fingertip, the state ST1 shifts to a state ST2, in which only the designated air tag is displayed. When in the state ST2 the user moves the fingertip FG off the subject MN and the fingertip FG is no longer displayed on the display section 101, or when the user acts as if the user was undecided, moving the fingertip FG restlessly, then it is possible to delete the specified air tag and return the state ST2 to the state ST1. Then, when the user points to another air tag at the fingertip FG, the state ST1 again shifts to the state ST2.

In the state ST2, when the user performs a double tap operation (which is an operation of quickly tapping the fingertip on the paper twice) while pointing to the particular air tag displayable position on the subject MN, then the image analysis section 103a recognizes this operation by known image analysis using the finger detection data 103d, and the state ST2 shifts to a state ST3, in which the content of the electronic additional information is displayed while being superimposed over the subject MN displayed in real time.

In the state ST3, the display control section 103b deletes the designated air tag that is on display, and superimposes the content of the electronic additional information (for example, help information explaining the word, a detailed configuration of the drawing, and moving image information on appliance operation statuses) corresponding to the air tag over the subject MN displayed in real time. Thus, the content of the electronic additional information is displayed in an overlaid manner. Then, when the display of the content of the electronic additional information ends, or when the user makes a force-quit command with respect to the display of the content of the electronic additional information (by performing, for example, a pinch-in operation (which is an operation of two fingertips on the paper shifting from a state in which the two fingertips are apart from one another to a state in which they are close to one another)), then the state ST3 returns to the state ST2.

In the state ST3, the content of the electronic additional information is displayed in an overlaid manner, that is, the content of the electronic additional information is superimposed over the subject MN displayed in real time. With the subject MN displayed in real time, however, viewing difficulties can occur due to hand jiggling or similar occurrences. In this case, in the state ST2, the user may perform a pinch-out operation using two fingers while pointing to the particular air tag displayable position on the subject MN. (The pinch-out operation is an operation of two fingertips on the paper shifting from a state in which the two fingertips are close to one another to a state in which they are apart from one another.) When the pinch-out operation is performed, the image analysis section 103a recognizes this operation by known image analysis using the finger detection data 103d, and the state ST2 shifts to a state ST4, in which the content of the electronic additional information is displayed while being superimposed over the electronic data of the subject MN.

In the state ST4, the display control section 103b deletes the designated air tag that is on display and ends the real-time display of the real image. Then, the display control section 103b superimposes the content of the electronic additional information (for example, help information explaining the word, a detailed configuration of the drawing, and moving image information on appliance operation statuses) corresponding to the air tag over the electronic data of the subject MN (for example, PDF data or JPEG data obtained by scanning the subject MN in advance) called up from the database 301 in advance. Thus, the content of the electronic additional information is displayed in an overlaid manner. Thus, use of the electronic data of the subject MN to display the content of the electronic additional information in an overlaid manner ensures clear display of the subject MN on the display section 101 regardless of hand jiggling or similar occurrences. Then, when the display of the content of the electronic additional information ends, or when the user makes a force-quit command with respect to the display of the content of the electronic additional information (by performing, for example, the pinch-in operation), then the state ST4 returns to the state ST2.

In the above example, prior to the operation of pointing by the user of the image processing terminal 100 at the fingertip FG, the display control section 103b of the image processing section 103 displays on the display section 101 all the plurality of air tags to be displayed. (This example corresponds to FIG. 4, which shows the state in which all the air tags are displayed on the display section 101 at their respective positions respectively corresponding to the air tag displayable positions PTa to PTc. The above example has a more direct connection to the state shown in FIG. 6A).

In this case, with all the air tags displayed, the user is able to, in advance, grasp the whole picture of the plurality of pieces of electronic additional information corresponding to the subject MN.

In this state, when the user of the image processing terminal 100 performs the operation of pointing at the fingertip FG, the display control section 103b may highlight only the specified air tag such as by changing the text size or the color of the specified air tag.

Then, the display control section 103b displays only the specified air tag, while deleting the display of the other air tags than the specified air tag. (This state corresponds to the right end representation of FIG. 4 and to FIG. 6B.) With this processing, in which all the plurality of air tags are displayed and then only the specified air tag is displayed, the user will not be annoyed by the display of unnecessary pieces of electronic additional information when the user needs access to a necessary piece of electronic additional information.

It should be noted, however, that an example not forming part of the present invention does not exclude the option of the display control section 103b of the image processing section 103 not displaying the plurality of air tags to be displayed on the display section 101 prior to the operation of pointing by the user of the image processing terminal 100 at the fingertip FG.

It is of course possible to display all the plurality of air tags on the display section 101 at the time when the image analysis section 103a specifies the particular code CD and the electronic additional information obtaining section 103c obtains, using the particular code CD as a key, the electronic additional information and the electronic data information of the subject MN from the database 301. In this case, however, a large number of air tags would be displayed as in FIG. 6A, which might confuse the user.

In view of this, in this case, instead of displaying the plurality of air tags to be displayed on the display section 101, it is possible to display only the air tag corresponding to the position specified by the user's operation of pointing on the subject MN at the fingertip FG. This ensures a simple display screen with minimized air tag display.

With the image processing system and the method for processing an image according to this embodiment, based on the operation of pointing, on the subject MN instead of on the display section 101, to a particular air tag displayable position within the subject MN by the user of the image processing terminal 100 at the fingertip FG, the image processing section 103 specifies the position of the fingertip FG on the display section 101 by image analysis, thereby specifying the particular air tag displayable position within the subject MN. Then, the image processing section 103 displays on the display section 101 only the air tag, among the plurality of air tags, corresponding to the particular air tag displayable position. This eliminates or minimizes difficulty in selecting an air tag, and realizes an image processing system and a method for processing an image that ensure selection of a desired air tag even when a large number of air tags exist.

Also in the image processing system and the method for processing an image according to this embodiment, it is possible, after the operation of pointing at the fingertip FG, to delete the display of the other air tags than the air tag corresponding to the particular air tag displayable position, and display only the air tag corresponding to the particular air tag displayable position. In this case, the user is able to, in advance, grasp the whole picture of the plurality of pieces of electronic additional information corresponding to the subject MN, while at the same time the user will not be annoyed by the display of unnecessary pieces of electronic additional information when the user needs access to a necessary piece of electronic additional information.

### <Example not forming part of the claimed invention>

This example is a modification of the image processing system and the method for processing an image according to the embodiment explained above, and is regarding such an image processing system and a method for processing an image that based on an operation of zooming in on a particular air tag displayable position within the subject MN displayed on the display section 101 or based on an operation of making the photographing section 102 close to the particular air tag displayable position within the subject MN performed by the user of the image processing terminal 100, instead of based on the user's pointing to the particular air tag displayable position within the subject at a fingertip of the user, the image processing section 103 specifies the particular air tag displayable position within the subject MN. Then, the image processing section 103 displays on the display section 101 only the air tag, among the plurality of air tags, corresponding to the particular air tag displayable position.

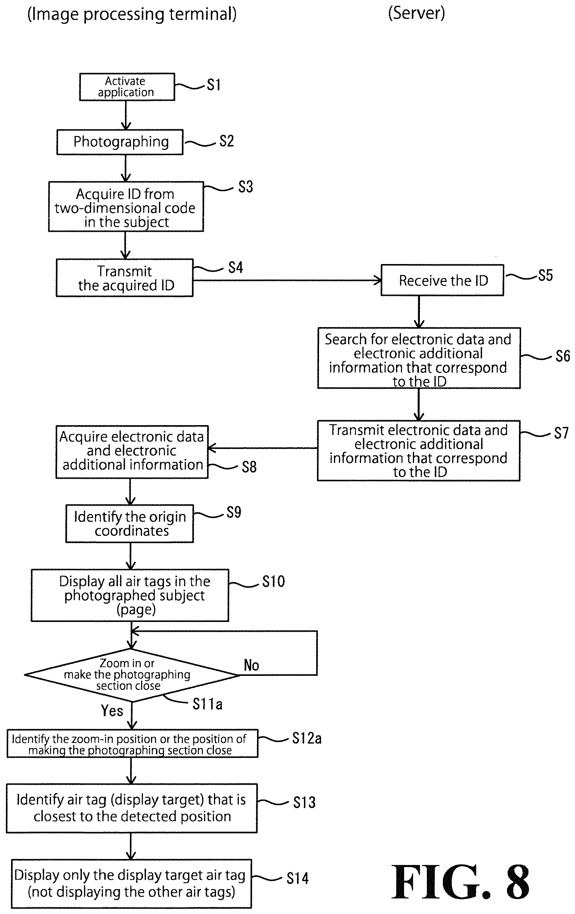

FIG. 8 is a flowchart of processing executed the image processing terminal 100 and the server 300 in the image processing system and the method for processing an image according to this example. Steps S1 to S10 will not be elaborated here, since they are identical to those in the flow shown in FIG. 5, which concerns the image processing system and the method for processing an image according to embodiment 1.

As described in "Problems to be Solved by the Invention", displaying a large number of air tags on the display section 101 as shown in FIG. 6A can cause an erroneous touch on an adjacent air tag on the touch screen display section. Thus, it can be difficult to select a desired air tag.

In view of this, in this example, the desired position to display the electronic additional information is designated among the air tag displayable positions PTa to PTc within the subject MN in the following manner. Specifically, the user of the image processing terminal 100 performs an operation of zooming in on a particular air tag displayable position within the subject MN displayed on the display section 101 so that only one air tag displayable position is contained in the display area of the display section 101, or the user performs an operation of making the photographing section 102 close to the particular air tag displayable position within the subject MN so that only one air tag displayable position is contained in the field angle of the photographing section 102. Here, the image processing terminal 100 has its image analysis section 103a detect whether the user has performed the zoom-in operation or the closeup operation (step S11a). Then, when the image analysis section 103a detects the user's zoom-in operation or closeup operation (Yes at step 11a), then the image analysis section 103a specifies where the particular air tag displayable position targeted for the zoom-in or closeup is within the subject MN (step S12a), and displays on the display section 101 an only air tag, among a plurality of air tags, corresponding to the particular air tag displayable position (step S13).

When the above-described operation is performed to display only the air tag corresponding to the particular air tag displayable position, the image analysis section 103a has already determined, at step S9, the paper area and paper orientation of the photographed subject MN by a known image analysis technique. Based on the determination, the image analysis section 103a has already specified the origin (for example, the upper left corner of the paper) of the subject MN. Thus, when the user handles the image processing terminal 100 to perform the operation of zooming in on the particular air tag displayable position within the subject MN displayed on the display section 101, or to perform the operation of making the photographing section 102 close to the particular air tag displayable position within the subject MN, the coordinates of the position displayed on the display section 101 after the zoom-in operation or the operation of making the photographing section 102 close to the particular air tag displayable position are calculated by a known image processing technique.

Based on this calculation, the image analysis section 103a converts the position into two-dimensional coordinates on the subject MN. Next, the display control section 103b specifies, as the particular air tag displayable position, one of the air tag displayable positions PTa to PTc within the subject MNa that is closest to the converted coordinates. Then, the display control section 103b displays on the display section 101 only the air tag, among the plurality of air tags, corresponding to the particular air tag displayable position. This state corresponds to the right end representation of FIG. 4 and to FIG. 6B.

It is noted that since no fingertip detection is performed in this example, the finger detection data 103d is not necessary in the configuration of the image processing terminal 100 shown in FIG. 2.

At the time of specifying the air tag, it is possible to change the display form of the air tag in conjunction with the operation of zooming in on the particular air tag displayable position within the subject MN displayed on the display section 101 or the operation of making the photographing section 102 close to the particular air tag displayable position within the subject MN. For example, it is possible to gradually diminish the text size of the displayed item in the air tag in conjunction with an operation of increasing the text size of the displayed item in the air tag and/or an operation of zooming out from the particular air tag displayable position within the subject MN displayed on the display section 101, or in conjunction with an operation of making the photographing section 102 apart from the particular air tag displayable position within the subject MN.

When the electronic additional information is displayed as text information after the air tag has been specified, it is possible to change how to display the electronic additional information in conjunction with the operation of further zooming in on the particular air tag displayable position within the subject MN displayed on the display section 101 or the operation of making the photographing section 102 closer to the particular air tag displayable position within the subject MN. For example, it is possible to gradually diminish the text size of the electronic additional information or reduce the number of text words to be displayed in conjunction with the operation of increasing the text size of the electronic additional information and increasing the number of text words to be displayed and/or the operation of zooming out from the particular air tag displayable position within the subject MN displayed on the display section 101, or in conjunction with the operation of making the photographing section 102 apart from the particular air tag displayable position within the subject MN.

This example is otherwise similar to the image processing system and the method for processing an image according to the embodiment explained above, and will not be further elaborated here.

With the image processing system and the method for processing an image according to this example, based on the operation of zooming in on the particular air tag displayable position within the subject MN displayed on the display section 101 or the operation of making the photographing section 102 close to the particular air tag displayable position within the subject MN performed by the user of the image processing terminal 100, the image processing section 103 specifies the particular air tag displayable position within the subject MN and displays on the display section 101 only the air tag, among the plurality of air tags, corresponding to the particular air tag displayable position. This eliminates or minimizes difficulty in selecting an air tag, and realizes an image processing system and a method for processing an image that ensure selection of a desired air tag even when a large number of air tags exist.

### <Miscellaneous notes>

While the above-described embodiment is regarding an image processing system and a method for processing an image, the embodiment should not be construed as limiting the present invention. The present invention encompasses a program (application program) that causes various image processing terminals implemented by various computers to perform the steps of the method for processing an image according to the above-described embodiment. This realizes a program that ensures such a method for processing an image that ensures selection of a desired air tag even when a large number of air tags exist.

### [Description of the Reference Numeral]

100: Image processing terminal, 101: Display section, 102: Photographing section, 103: Image processing section, 103a: Image analysis section, 103b: Display control section, 103c: Electronic additional information obtaining section, 103d: Finger detection data, 104: Network interface, 200: Network, 300: Server, 301: Database, MN: Subject, ESa, ESb, ESd: Electronic additional information, CD: Code, FG: Fingertip, PTa to PTc: Air tag displayable position, ATa: Air tag.
This realizes a program that ensures such a method for processing an image that ensures selection of a desired air tag even when a large number of air tags exist.

### [Description of the Reference Numeral]

100: Image processing terminal, 101: Display section, 102: Photographing section, 103: Image processing section, 103a: Image analysis section, 103b: Display control section, 103c: Electronic additional information obtaining section, 103d: Finger detection data, 104: Network interface, 200: Network, 300: Server, 301: Database, MN: Subject, ESa, ESb, ESd: Electronic additional information, CD: Code, FG: Fingertip, PTa to PTc: Air tag displayable position, ATa: Air tag.

## Claims

1. An image processing terminal (100), comprising:
**a)** a photographing section (102) configured to photograph an image of a subject;
**b)** a display section (101) configured to display the image of the subject photographed by the photographing section (102);
**c)** an electronic additional information obtaining section (103c) configured to obtain electronic additional information to be added to the image of the subject photographed by the photographing section (102);
**d)** a display control section (103b) configured to control the display section (101) to display the image of the subject with at least one air tag (Ata) superimposed over the image of the subject, the at least one air tag (Ata) corresponding to the electronic additional information obtained by the electronic additional information obtaining section (103c); and
**e)** an image analysis section (103a) configured to analyze the image of the subject photographed by the photographing section (102);
**f)** wherein the at least one air tag (Ata) comprises a plurality of air tags (Ata); and
***characterized in that***
**g)** in the case where, while the display section (101) is displaying the plurality of air tags (Ata), the photographing section (102) photographs a user of the image processing terminal (100) performing an operation of pointing to a particular air tag displayable position (PTa-PTc) within the subject at a fingertip of the user;
**h)** the image analysis section (103a) is configured to specify a position of the fingertip in the subject photographed by the photographing section (102) so as to specify the particular air tag displayable position (PTa-PTc) within the subject pointed to by the fingertip; and
**i)** the display section (101) is configured to display an air tag (ATa), among the plurality of air tags (ATa), corresponding to the particular air tag displayable position (PTa-PTc) specified by the image analysis section (103a), and configured to remove images of a rest of the plurality of air tags (AT).

2. The image processing terminal (100) according to claim 1,
wherein the subject is assigned a particular code; and
wherein the image analysis section (103a) is configured to analyze the image of the subject photographed by the photographing section (102) so as to extract the particular code of the subject.

3. The image processing terminal (100) according to any one of claims 1 or 2, wherein the image of the subject over which the display control section (103b) superimposes the at least one air tag (Ata) comprises a real-time image of the subject photographed by the photographing section (102).

4. The image processing terminal (100) according to any one of claims 1 or 2, wherein the image of the subject over which the display control section (103b) superimposes the at least one air tag (Ata) comprises an image obtained from electronic data of the subject.

5. The image processing terminal (100) according to any one of claims 1 to 4, further comprising a network interface (104) configured to communicate with a server (300) through a network (200), the server (300) comprising a database (301) configured to store the electronic additional information of the subject in relation to a particular code to specify the subject;
wherein the network interface (104) is configured to transmit to the server (300) the particular code to specify the subject photographed by the photographing section (102), and configured to receive from the server (300) the electronic additional information of the subject so that the electronic additional information obtaining section (103c) obtains the electronic additional information.

6. The image processing terminal (100) according to any one of claims 1 to 5, wherein the image analysis section (103a) is configured to specify an origin position of the subject, and then specify a coordinate position of the particular air tag displayable position corresponding to the at least one air tag (ATa) using coordinates relative to the origin position.

7. The image processing terminal (100) according to any one of claims 1 to 6, wherein when the image analysis section (103a) recognizes a double tap operation on the subject performed by the user, the display control section (103b) is configured to control the display section (101) to display the image of the subject with the at least one air tag (ATa) superimposed over the image of the subject.

8. The image processing terminal (100) according to any one of claims 1 to 6, wherein when the image analysis section (103a) recognizes a pinch-out operation on the subject performed by the user, the display control section (103b) is configured to control the display section (101) to display the image of the subject with the at least one air tag (ATa) superimposed over the image of the subject.

9. The image processing terminal (100) according to any one of claims 1 to 8, wherein the display section (101) is configured to highlight the air tag (AT) corresponding to the particular air tag displayable position specified by the image analysis section (103a).

10. An image processing system, **characterized by**:
the image processing terminal (100) according to any one of claims 1 to 10; and
a server (300) connectable to the image processing terminal (100) through a network (200);
wherein the server (300) comprises a database (301) configured to store electronic additional information of a subject in relation to a particular code to specify the subject; and
wherein the image processing terminal (100) is configured to transmit to the server (300) the particular code to specify the subject photographed by a photographing section (102) of the image processing terminal (100), and configured to receive from the server (300) the electronic additional information of the subject so that an electronic additional information obtaining section (103c) of the image processing terminal (100) obtains the electronic additional information.

11. A computer-readable storage medium storing a control program of an image processing terminal (100), the image processing terminal (100) comprising a photographing section (102) configured to photograph an image of a subject and a display section (101) configured to display the image of the subject photographed by the photographing section (102), the control program causing a computer to perform:
obtaining electronic additional information to be added to the subject photographed by the photographing section (102);
controlling the display section (101) to display the image of the subject with at least one air tag (Ata) superimposed over the image of the subject, the at least one air tag (Ata) corresponding to the electronic additional information obtained in the obtaining step;
in the case where, while the display section (101) is displaying a plurality of air tags (Ata) in the controlling step, the photographing section (102) photographs a user of the image processing terminal (100) performing an operation of pointing to a particular air tag displayable position (PTa-PTc) within the subject at a fingertip of the user, specifying a position of the fingertip in the subject photographed by the photographing section (102) so as to specify the particular position within the subject pointed to by the fingertip; and
controlling the display section (101) to display an air tag (Ata), among the plurality of air tags (Ata), corresponding to the particular air tag displayable position (PTa-PTc) specified in the image analysis performing step, and configured to remove images of a rest of the plurality of air tags (ATa).

## Patentansprüche

1. Bildverarbeitungs-Endgerät (100), umfassend:
**a)** einen Fotografierabschnitt (102), der dazu konfiguriert ist, ein Bild eines Subjekts zu fotografieren;
**b)** einen Anzeigeabschnitt (101), der dazu konfiguriert ist, das vom Fotografierabschnitt (102) fotografierte Bild des Subjekts anzuzeigen;
**c)** einen Abschnitt zum Erhalten von elektronischen Zusatzinformationen (103c), der dazu konfiguriert ist, elektronische Zusatzinformationen zu erhalten, die dem vom Fotografierabschnitt (102) fotografierten Bild des Subjekts hinzugefügt werden sollen;
**d)** einen Anzeigesteuerungsabschnitt (103b), der dazu konfiguriert ist, den Anzeigeabschnitt (101) so zu steuern, dass das Bild des Subjekts mit mindestens einem Air-Tag (Ata) angezeigt wird, das dem Bild des Subjekts überlagert ist, wobei das mindestens eine Air-Tag (Ata) den vom Abschnitt zum Erhalten von elektronischen Zusatzinformationen (103c) erhaltenen elektronischen Zusatzinformationen entspricht; und
**e)** einen Bildanalyseabschnitt (103a), der dazu konfiguriert ist, das vom Fotografierabschnitt (102) fotografierte Bild des Subjekts zu analysieren;
**f)** wobei das mindestens eine Air-Tag (Ata) eine Vielzahl von Air-Tags (Ata) umfasst; und
***dadurch gekennzeichnet, dass***
**g)** in dem Fall, in dem der Fotografierabschnitt (102), während der Anzeigeabschnitt (101) die Vielzahl von Air-Tags (Ata) anzeigt, einen Benutzer des Bildverarbeitungs-Endgeräts (100) fotografiert, der einen Vorgang des Zeigens auf eine bestimmte anzeigbare Air-Tag-Position (PTa-PTc) innerhalb des Subjekts an einer Fingerspitze des Benutzers durchführt;
**h)** der Bildanalyseabschnitt (103a) dazu konfiguriert ist, eine Position der Fingerspitze in dem vom Fotografierabschnitt (102) fotografierten Subjekt zu spezifizieren, um die bestimmte anzeigbare Air-Tag-Position (PTa-PTc) innerhalb des Subjekts, auf die mit der Fingerspitze gezeigt wird, zu spezifizieren; und
**i)** der Anzeigeabschnitt (101) dazu konfiguriert ist, ein Air-Tag (ATa) aus der Vielzahl von Air-Tags (ATa) anzuzeigen, das der vom Bildanalyseabschnitt (103a) spezifizierten bestimmten anzeigbaren Air-Tag-Position (PTa-PTc) entspricht, und dazu konfiguriert ist, Bilder von einem Rest der Vielzahl von Air-Tags (AT) zu entfernen.

2. Bildverarbeitungs-Endgerät (100) nach Anspruch 1,
wobei dem Subjekt ein bestimmter Code zugewiesen wird; und
wobei der Bildanalyseabschnitt (103a) dazu konfiguriert ist, das vom Fotografierabschnitt (102) fotografierte Bild des Subjekts zu analysieren, um den bestimmten Code des Subjekts zu extrahieren.

3. Bildverarbeitungs-Endgerät (100) nach einem der Ansprüche 1 oder 2, wobei das Bild des Subjekts, dem der Anzeigesteuerungsabschnitt (103b) das mindestens eine Air-Tag (Ata) überlagert, ein vom Fotografierabschnitt (102) fotografiertes Echtzeitbild des Subjekts umfasst.

4. Bildverarbeitungs-Endgerät (100) nach einem der Ansprüche 1 oder 2, wobei das Bild des Subjekts, dem der Anzeigesteuerungsabschnitt (103b) das mindestens eine Air-Tag (Ata) überlagert, ein aus elektronischen Daten des Subjekts erhaltenes Bild umfasst.

5. Bildverarbeitungs-Endgerät (100) nach einem der Ansprüche 1 bis 4, weiter eine Netzwerkschnittstelle (104) umfassend, die dazu konfiguriert ist, über ein Netzwerk (200) mit einem Server (300) zu kommunizieren, wobei der Server (300) eine Datenbank (301) umfasst, die dazu konfiguriert ist, die elektronischen Zusatzinformationen des Subjekts in Verbindung mit einem bestimmten Code zu speichern, um das Subjekt zu spezifizieren;
wobei die Netzwerkschnittstelle (104) dazu konfiguriert ist, den bestimmten Code an den Server (300) zu übertragen, um das vom Fotografierabschnitt (102) fotografierte Subjekt zu spezifizieren, und dazu konfiguriert ist, vom Server (300) die elektronischen Zusatzinformationen des Subjekts zu empfangen, sodass der Abschnitt zum Erhalten von elektronischen Zusatzinformationen (103c) die elektronischen Zusatzinformationen erhält.

6. Bildverarbeitungs-Endgerät (100) nach einem der Ansprüche 1 bis 5, wobei der Bildanalyseabschnitt (103a) dazu konfiguriert ist, eine Ursprungsposition des Subjekts zu spezifizieren, und dann eine Koordinatenposition der bestimmten anzeigbaren Air-Tag-Position, die dem mindestens einen Air-Tag (ATa) entspricht, unter Verwendung von Koordinaten zu spezifizieren, die sich auf die Ursprungsposition beziehen.

7. Bildverarbeitungs-Endgerät (100) nach einem der Ansprüche 1 bis 6, wobei wenn der Bildanalyseabschnitt (103a) einen Doppeltipp-Vorgang auf dem Subjekt erkennt, der vom Benutzer durchgeführt wird, der Anzeigesteuerungsabschnitt (103b) dazu konfiguriert ist, den Anzeigeabschnitt (101) so zu steuern, dass das Bild des Subjekts mit dem mindestens einem Air-Tag (ATa) dem Bild des Subjekts überlagert angezeigt wird.

8. Bildverarbeitungs-Endgerät (100) nach einem der Ansprüche 1 bis 6, wobei wenn der Bildanalyseabschnitt (103a) einen Aufzieh-Vorgang auf dem Subjekt erkennt, der vom Benutzer durchgeführt wird, der Anzeigesteuerungsabschnitt (103b) dazu konfiguriert ist, den Anzeigeabschnitt (101) so zu steuern, dass das Bild des Subjekts mit dem mindestens einen Air-Tag (ATa) dem Bild des Subjekts überlagert angezeigt wird.

9. Bildverarbeitungs-Endgerät (100) nach einem der Ansprüche 1 bis 8, wobei der Anzeigeabschnitt (101) dazu konfiguriert ist, das Air-Tag (AT) zu markieren, das der vom Bildanalyseabschnitt (103a) spezifizierten bestimmten anzeigbaren Air-Tag-Position entspricht.

10. Bildverarbeitungssystem, **gekennzeichnet durch**:
das Bildverarbeitungs-Endgerät (100) nach einem der Ansprüche 1 bis 10; und
einen Server (300), der über ein Netzwerk (200) mit dem Bildverarbeitungs-Endgerät (100) verbunden werden kann;
wobei der Server (300) eine Datenbank (301) umfasst, die dazu konfiguriert ist, elektronische Zusatzinformationen eines Subjekts in Verbindung mit einem bestimmten Code zu speichern, um das Subjekt zu spezifizieren; und
wobei das Bildverarbeitungs-Endgerät (100) dazu konfiguriert ist, den bestimmten Code an den Server (300) zu übertragen, um das von einem Fotografierabschnitt (102) des Bildverarbeitungs-Endgeräts (100) fotografierte Subjekt zu spezifizieren, und dazu konfiguriert ist, vom Server (300) die elektronischen Zusatzinformationen des Subjekts zu empfangen, sodass ein Abschnitt zum Erhalten von elektronischen Zusatzinformationen (103c) des Bildverarbeitungs-Endgeräts (100) die elektronischen Zusatzinformationen erhält.

11. Computerlesbares Speichermedium, das ein Steuerungsprogramm eines Bildverarbeitungs-Endgeräts (100) speichert, wobei das Bildverarbeitungs-Endgerät (100) einen Fotografierabschnitt (102) umfasst, der dazu konfiguriert ist, ein Bild eines Subjekts zu fotografieren, und einen Anzeigeabschnitt (101), der dazu konfiguriert ist, das vom Fotografierabschnitt (102) fotografierte Bild des Subjekts anzuzeigen, wobei das Steuerungsprogramm einen Computer dazu bringt, durchzuführen:
Erhalten von elektronischen Zusatzinformationen, die dem vom Fotografierabschnitt (102) fotografierten Subjekt hinzugefügt werden sollen;
Steuern des Anzeigeabschnitts (101) so, dass das Bild des Subjekts mit mindestens einem Air-Tag (Ata) dem Bild des Subjekts überlagert angezeigt wird, wobei das mindestens eine Air-Tag (Ata) den im Schritt des Erhaltens erhaltenen elektronischen Zusatzinformationen entspricht;
in dem Fall, in dem der Fotografierabschnitt (102), während der Anzeigeabschnitt (101) im Steuerungsschnitt eine Vielzahl von Air-Tags (Ata) anzeigt, einen Benutzer des Bildverarbeitungs-Endgeräts (100) fotografiert, der einen Vorgang des Zeigens auf eine bestimmte anzeigbare Air-Tag-Position (PTa-PTc) innerhalb des Subjekts an einer Fingerspitze des Benutzers durchführt, Spezifizieren einer Position der Fingerspitze in dem vom Fotografierabschnitt (102) fotografierten Subjekt, um die bestimmte Position innerhalb des Subjekts, auf die mit der Fingerspitze gezeigt wird, zu spezifizieren; und
Steuern des Anzeigeabschnitts (101) so, dass ein Air-Tag (Ata) aus der Vielzahl von Air-Tags (ATa) angezeigt wird, das der im Schritt des Durchführens der Bildanalyse spezifizierten bestimmten anzeigbaren Air-Tag-Position (PTa-PTc) entspricht, und dazu konfiguriert, Bilder von einem Rest der Vielzahl von Air-Tags (ATa) zu entfernen.

## Revendications

1. Terminal de traitement d'image (100), comprenant :
**a)** une section de photographie (102) configurée pour photographier une image d'un sujet ;
**b)** une section d'affichage (101) configurée pour afficher l'image du sujet photographié par la section de photographie (102) ;
**c)** une section d'obtention d'informations électroniques supplémentaires (103c) configurée pour obtenir des informations électroniques supplémentaires à ajouter à l'image du sujet photographié par la section de photographie (102) ;
**d)** une section de commande d'affichage (103b) configurée pour commander la section d'affichage (101) afin d'afficher l'image du sujet avec au moins une balise aérienne (Ata) superposée à l'image du sujet, la au moins une balise aérienne (Ata) correspondant aux informations électroniques supplémentaires obtenues par la section d'obtention d'informations électroniques supplémentaires (103c) ; et
**e)** une section d'analyse d'image (103a) configurée pour analyser l'image du sujet photographié par la section de photographie (102) ;
**f)** dans lequel la au moins une balise aérienne (Ata) comprend une pluralité de balises aériennes (Ata) ; et
***caractérisé en ce que***
**g)** dans le cas où, pendant que la section d'affichage (101) affiche la pluralité de balises aériennes (Ata), la section de photographie (102) photographie un utilisateur du terminal de traitement d'image (100) effectuant une opération de pointage vers une position affichable de balise aérienne particulière (PTa-PTc) au sein du sujet au niveau d'un bout de doigt de l'utilisateur ;
**h)** la section d'analyse d'image (103a) est configurée pour spécifier une position de bout de doigt dans le sujet photographié par la section de photographie (102) de manière à spécifier la position affichable de balise aérienne particulière (PTa-PTc) au sein du sujet indiquée par le bout de doigt ; et
**i)** la section d'affichage (101) est configurée pour afficher une balise aérienne (ATa), parmi la pluralité de balises aériennes (ATa), correspondant à la position affichable de balise aérienne particulière (PTa-PTc) spécifiée par la section d'analyse d'image (103a), et configurée pour supprimer des images d'un reste de la pluralité de balises aériennes (AT).

2. Terminal de traitement d'image (100) selon la revendication 1,
dans lequel un code particulier est attribué au sujet ; et
dans lequel la section d'analyse d'image (103a) est configurée pour analyser l'image du sujet photographié par la section de photographie (102) afin d'extraire le code particulier du sujet.

3. Terminal de traitement d'image (100) selon l'une quelconque des revendications 1 ou 2, dans lequel l'image du sujet sur laquelle la section de commande d'affichage (103b) superpose la au moins une balise aérienne (Ata) comprend une image en temps réel du sujet photographié par la section de photographie (102).

4. Terminal de traitement d'image (100) selon l'une quelconque des revendications 1 ou 2, dans lequel l'image du sujet sur laquelle la section de commande d'affichage (103b) superpose la au moins une balise aérienne (Ata) comprend une image obtenue à partir de données électroniques du sujet.

5. Terminal de traitement d'image (100) selon l'une quelconque des revendications 1 à 4, comprenant en outre une interface réseau (104) configurée pour communiquer avec un serveur (300) via un réseau (200), le serveur (300) comprenant une base de données (301) configurée pour stocker les informations électroniques supplémentaires du sujet en relation avec un code particulier pour spécifier le sujet ;
dans lequel l'interface de réseau (104) est configurée pour transmettre au serveur (300) le code particulier pour spécifier le sujet photographié par la section de photographie (102), et configurée pour recevoir du serveur (300) les informations électroniques supplémentaires du sujet de sorte que la section d'obtention d'informations électroniques supplémentaires (103c) obtient les informations électroniques supplémentaires.

6. Terminal de traitement d'image (100) selon l'une quelconque des revendications 1 à 5, dans lequel la section d'analyse d'image (103a) est configurée pour spécifier une position d'origine du sujet, puis pour spécifier une position de coordonnées de la position affichable de balise aérienne particulière correspondant à la au moins une balise aérienne (ATa) en utilisant des coordonnées relatives à la position d'origine.

7. Terminal de traitement d'image (100) selon l'une quelconque des revendications 1 à 6, dans lequel lorsque la section d'analyse d'image (103a) reconnaît une opération consistant à toucher deux fois sur le sujet effectuée par l'utilisateur, la section de commande d'affichage (103b) est configurée pour commander la section d'affichage (101) afin d'afficher l'image du sujet avec la au moins une balise aérienne (ATa) superposée à l'image du sujet.

8. Terminal de traitement d'image (100) selon l'une quelconque des revendications 1 à 6, dans lequel lorsque la section d'analyse d'image (103a) reconnaît une opération consistant à pincer vers l'extérieur le sujet effectuée par l'utilisateur, la section de commande d'affichage (103b) est configuré pour commander la section d'affichage (101) afin d'afficher l'image du sujet avec la au moins une balise aérienne (ATa) superposée à l'image du sujet.

9. Terminal de traitement d'image (100) selon l'une quelconque des revendications 1 à 8, dans lequel la section d'affichage (101) est configurée pour mettre en évidence la balise aérienne (AT) correspondant à la position affichable de balise aérienne particulière spécifiée par la section d'analyse d'image (103a).

10. Système de traitement d'image, **caractérisé par** :
le terminal de traitement d'image (100) selon l'une quelconque des revendications 1 à 10 ; et
un serveur (300) pouvant être connecté au terminal de traitement d'image (100) via un réseau (200) ;
dans lequel le serveur (300) comprend une base de données (301) configurée pour stocker des informations électroniques supplémentaires d'un sujet en relation avec un code particulier pour spécifier le sujet ; et
dans lequel le terminal de traitement d'image (100) est configuré pour transmettre au serveur (300) le code particulier pour spécifier le sujet photographié par une section de photographie (102) du terminal de traitement d'image (100), et configuré pour recevoir du serveur (300) les informations électroniques supplémentaires du sujet de sorte qu'une section d'obtention d'informations électroniques supplémentaires (103c) du terminal de traitement d'image (100) obtient les informations électroniques supplémentaires.

11. Support de stockage lisible par ordinateur stockant un programme de commande d'un terminal de traitement d'image (100), le terminal de traitement d'image (100) comprenant une section de photographie (102) configurée pour photographier une image d'un sujet et une section d'affichage (101) configurée pour afficher l'image du sujet photographié par la section de photographie (102), le programme de commande amenant un ordinateur à effectuer les étapes consistant à :
obtenir des informations électroniques supplémentaires à ajouter au sujet photographié par la section de photographie (102) ;
commander la section d'affichage (101) pour afficher l'image du sujet avec au moins une balise aérienne (Ata) superposée à l'image du sujet, la au moins une balise aérienne (Ata) correspondant aux informations électroniques supplémentaires obtenues lors de l'étape d'obtention ;
dans le cas où, pendant que la section d'affichage (101) affiche une pluralité de balises aériennes (Ata) au cours de l'étape de commande, la section de photographie (102) photographie un utilisateur du terminal de traitement d'image (100) effectuant une opération de pointage vers une position affichable de balise aérienne particulière (PTa-PTc) au sein du sujet au niveau d'un bout de doigt de l'utilisateur, spécifier une position du bout de doigt dans le sujet photographié par la section de photographie (102) de manière à spécifier la position particulière au sein du sujet pointée par le bout de doigt ; et
commander la section d'affichage (101) pour afficher une balise aérienne (Ata), parmi la pluralité de balises aériennes (Ata), correspondant à la position affichable de balise aérienne particulière (PTa-PTc) spécifiée dans l'étape de réalisation d'analyse d'image, et configurée pour supprimer des images d'un reste de la pluralité de balises aériennes (ATa).
